Europäisches Patentamt

**(19)** European Patent Office

Office européen des brevets

**(11)** Publication number: **0 018 842**
**B1**

**(12)** EUROPEAN PATENT SPECIFICATION

**(45)** Date of publication of patent specification: **09.03.83**

**(51)** Int. Cl.³: **B 62 M 9/12**

**(21)** Application number: **80301455.4**

**(22)** Date of filing: **02.05.80**

**(54) Cycle derailleur with reduced width.**

**(30)** Priority: **04.05.79 JP 59801/79**

**(43)** Date of publication of application:
**12.11.80 Bulletin 80/23**

**(45)** Publication of the grant of the patent:
**09.03.83 Bulletin 83/10**

**(84)** Designated Contracting States:
**DE FR GB IT NL**

**(56)** References cited:
**FR - A - 844 979**
**FR - A - 925 850**
**FR - A - 974 676**
**FR - A - 1 021 813**
**GB - A - 988 349**

**(73)** Proprietor: **SHIMANO INDUSTRIAL COMPANY LIMITED**
**77, 3-cho Oimatsu-cho Sakai-shi**
**Osaka (JP)**

**(72)** Inventor: **Shimano, Keizo**
**3-81 Minamimachi**
**Midorigaoka Sakai-shi Osaka (JP)**

**(74)** Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England

Cycle derailleur with reduced width

This invention relates to a cycle derailleur for use in switching a drive chain between different sprockets of a multi-stage sprocket assembly for changing gear, which derailleur comprises a fixing member; a support member mounted on said fixing member so as to be movable relative thereto; a change-over frame pivotally supported on said support member via a first horizontally extending shaft; a coiled spring means arranged for acting between said support member and said change-over frame for tensioning a drive chain of the cycle in use of the derailleur; a first pulley rotatably mounted around said first shaft; and a second pulley rotatably supported on the change-over frame.

Generally, cycle derailleurs are so constructed that a shaft projects horizontally from a support member secured to a fixing member and has at its forward end a change-over frame pivotally mounted thereon, and a coiled tension spring is wound onto the shaft at its axially intermediate portion for acting between the support member and the change-over frame, and is retained at one end to the supporting member and at the other end to the change-over frame thereby to apply substantially constant tension to a drive chain guided by two pulleys on the frame.

In a derailleur constructed as described above, however, the tension spring and change-over frame are mounted axially along the shaft in series. Thus, the shaft supporting the first pulley has to be long enough to mount both the tension spring and a bearing portion for the first pulley axially adjacent each other. As a result, the derailleur has a substantial overall width.

In GB—A— 998 439 there is disclosed a derailleur in which a change-over frame is pivotally mounted on a support member via a first horizontally extending shaft. A second tubular shaft is disposed coaxially with and around the first shaft so as to define an annular chamber in which is disposed a coiled spring means for acting between the change-over frame and the support member for tensioning of the chain. Neither of the pulleys on the change-over frame is mounted on the first shaft and both are mounted in positions remote from said first shaft on separate shaft extending in an opposite direction so that the derailleur has a substantial overall width.

FR—A 974 676 has one of the chain pulleys on the change-over frame mounted on a shaft via which the change-over frame of the derailleur is mounted on another member. The chain tension spring is disposed for acting between the change-over frame and the cycle frame and there is no disclosure of any chain tension spring mounted around or inside any shaft.

It is an object of the present invention to provide a cycle derailleur, which is capable of mounting the change-over frame in proximity to the support member so that the overall laterall width of the derailleur is minimized.

According to the present invention a second tubular shaft is disposed coaxially with and around said first shaft so as to define an annular chamber therebetween, said second shaft being secured to one of said support member and said change-over frame, and said coiled spring means being disposed in said annular chamber around said first shaft.

According to the present invention the derailleur may be of the so-called parallelogram linkage mechanism type, in which the support member is supported on the fixing member via two parallel links. Also the derailleur may be of the type in which the support member is supported pivotally on the fixing member by means of a vertically extending shaft. In other words the type of the basic derailleur mechanism itself is not an essential feature of the invention.

In a derailleur of the invention the change-over frame can be mounted in proximity to the support member without regard to the coil tension spring. In other words, the change-over frame is positioned in proximity to the support member at a separation sufficient only for mounting of the first pulley, that is, without any additional spacing for accommodating the length of the tension spring. Consequently, it is possible to reduce the overall width of the derailleur.

Thus a cycle derailleur according to the present invention is usable even with cycles having a chain case, and projects laterally substantially less thereby reducing the danger of being hit by a foreign object. The reduction in size of the derailleur obtained also can help to reduce weight and air resistance.

Further preferred features of the invention will appear from the following description given by way of example of some preferred embodiments of the invention illustrated with reference to the accompanying drawings in which:—

Fig. 1 is a front view of a first embodiment of a derailleur of the invention;

Fig. 2 is a partially cutaway plan view of the derailleur of Fig. 1;

Fig. 3 is a sectional view taken on the line III—III in Fig. 2;

Fig. 4 is a front view of a second embodiment of a derailleur of the invention;

Fig. 5 is a sectional view taken on the line V—V in Fig. 4; and

Fig. 6 is a partial sectional view showing the principal improved portion of the embodiment of Figs. 4 and 5.

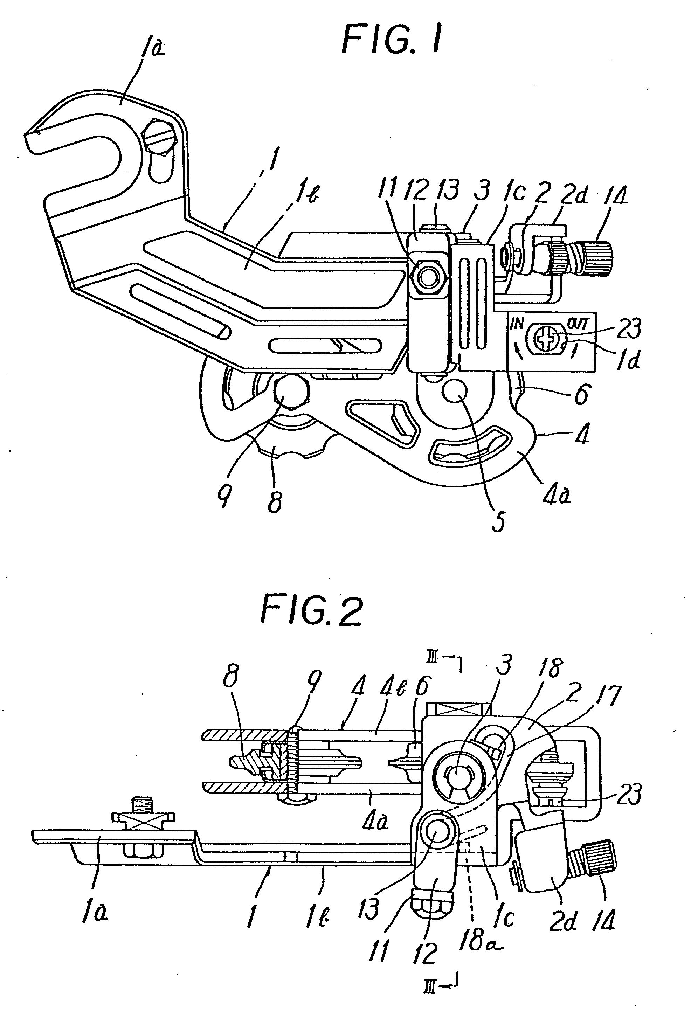

Referring to Figs. 1 to 3, a derailleur for a two speed gear change is shown, in which no linkage mechanism is used and a support member 2 is supported pivotally on a fixing member which can be secured to a cycle frame (not shown), by means of a generally vertically extending shaft 3. A change-over frame 4 is supported pivotally on the support member 2 about a first horizontally extending shaft 5 whose principal axis intersects the principal axis of the vertical shaft 3 substantially at right angles. A first pulley 6 is supported rotatably on a second shaft 7 which is tubular and sleeved coaxially on the first shaft 5, and a second pulley 8 is supported rotatably on the forward end of the change-over frame 4 through a third shaft 9 which extends parallel to the first shaft 5.

The fixing member 1 comprises a bracket 1a which in use of the derailleur is fixed together with a hub shaft in a fork end of a cycle and an extension 1b extending from the bracket 1a in a forward direction with respect to the cycle along a chain stay (not shown) thereof. The extension 1b projects horizontally from the upper edge of the bracket 1 at the front end thereof to form a horizontal portion 1c which carries a bush 10 rotatably supporting the vertical shaft 3. An arm 12 having a fixture 11 for a control wire of a control cable (not shown) is pivotally supported on the front end of the extension 1b via a vertically extending shaft 13.

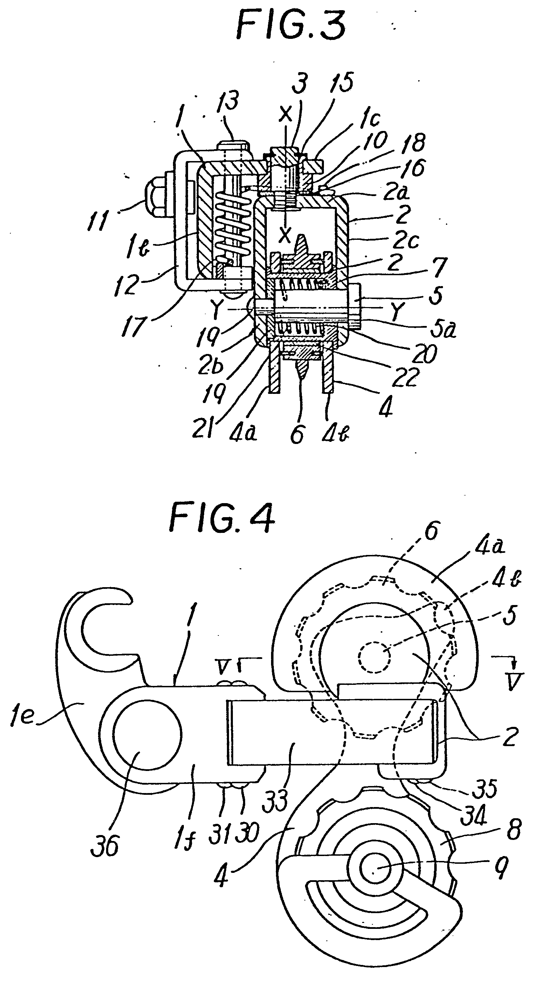

The support member 2, as shown in Fig. 3, comprises a top plate 2a and opposed side plates 2b and 2c and is generally in the form of an inverted U-shape in section. The vertical shaft 3 is screwed with the top plate 2a, and the first shaft 5 is fixed across the opposed side plates 2b and 2c. The top plate 2a extends to form an extension 2d on which a support 14 for an outer sheath of the control cable (not shown) is mounted. The vertical shaft 3 extends through the bush 10 and is held by an E-ring 15 to pivotally support the support member 2 on the fixing member 1. One end of a spring 17 is disposed and wound around, respectively the vertical shaft 13, the spring 17 being retained at one end by a spring seat 18a to the arm 12 and at its other end to a spring holder 18 provided at the top plate 2a of the support member 2. The spring 17 functions so as to both store energy and to restore the support member 2 to its position.

The change-over frame 4 comprises a pair of plates 4a and 4b and the second shaft 7 is secured to and throgh the plates 4a and 4b.

The first shaft 5 has a head 5a and is axially stepped. The second shaft 7 comprises a tubular member having an annular bearing end face, and is sleeved rotatably on the first shaft 5 through its bearing end face and a dish-like bush 19, thereby pivotally supporting the change-over frame 4 on the support member 2 through the first shaft 5.

The second shaft 7 has an inner diameter larger than the outer diameter of the principal part of the first shaft 5. The first pulley 6 is supported rotatably on the outer periphery of the second shaft 7 through a metal bearing 22. An annular chamber 20 is formed between the outer periphery of the first shaft 5 and the inner periphery of the second shaft 7, so that a coiled tension spring 21 can be housed within the chamber 20. The spring 21 is held at one end to the first shaft 5 and at its other end to the second shaft 7 secured to the change-over frame 4, thereby biasing the change-over frame 4 in a direction for tensioning a drive chain (not shown).

Thus the spring 21 functions to apply a substantially constant tension to the drive chain whilst the over-all width of the derailleur is reduced in comparison with that of a conventional derailleur due to the fact that the spring 21 is housed within the second shaft 7 and the first pulley 6.

An adjusting bolt 23, as shown in Figs. 1 and 2, is provided on the support member 2 to adjust the range of pivotal movement of the change-over frame 4. The adjusting bolt 23 abuts at its tip the forward end of the extension 1b of the fixing member and is controllable through a window 1d formed therein.

In the above described construction, the control wire is held at one end by the fixture 11 and the outer sheath is supported by the support 14. In use a control lever (not shown) is operated to pull the control wire to thereby swing the change-over frame 4 around the vertical shaft 3 against the force of the spring 17 and a chain (not shown) guided by the first and second pulleys 6, 8 is switched to a selected sprocket of the multi-stage sprocket assembly (not shown). Also, the change-over frame 4, which is biased by the spring 21 in a clockwise direction as viewed in Fig. 1, swings around the first shaft 5 following the switching of chain, thereby maintaining the chain under substantially constant tension.

In the above described embodiment, the support member 2 is supported pivotally by one vertical shaft 3. Alternatively though, the support member 2 could be supported movably on the fixing member 1 through two parallel links in the well known "parallellogram" type of derailleur arrangement.

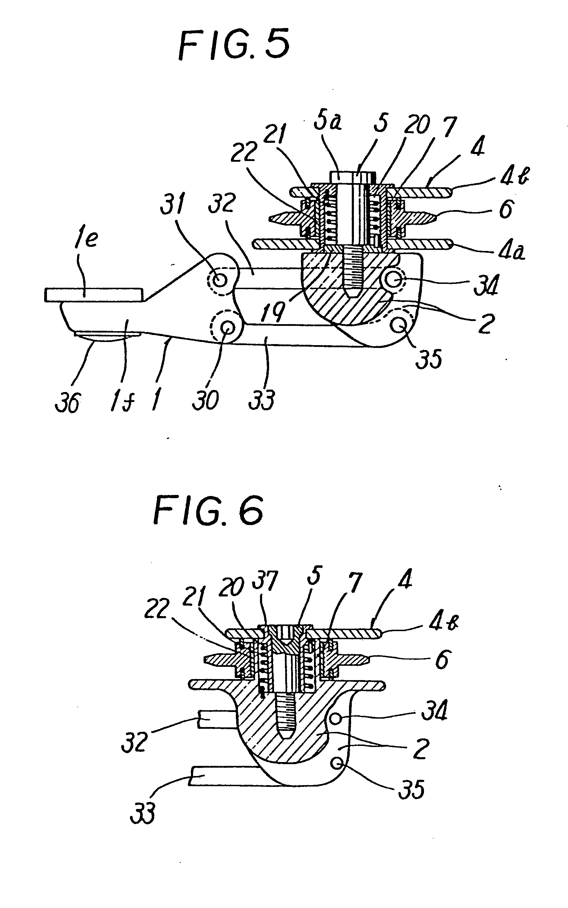

One embodiment of this latter type is shown in Figs. 4 and 5, in which components similar to those in Figs. 1 to 3 are identified by the same reference numbers. Two parallel links 32 and 33 of the parallellogram linkage are pivotally connected at one end to the fixing member 1 through respective pivot pins 30 and 31. The support member 2 is connected to the other ends of the links 32 and 33 through respective pivot pins 34 and 35. The construction and arrangement of the support of the change-over frame 4 and first pulley 6 and the mounting of the tension spring 21, are the same as in the first-described embodiment.

Referring to Figs. 4 and 5, the support member 2 is generally block-like. The first shaft 5 is mounted in cantilever arrangement on the supporting member 2 with one end screw-threadedly engaged in said support member 2. Alternatively, the support member 2 could have an inverted generally U-shaped form in section with the first shaft 5 supported at both ends across the side member plates of said U-shaped support member 2. The fixing member 1 comprises a bracket member 1e fixed in use to the fork end of the cycle and a support 1f mounting the links 32 and 33, the support 1f being separate from the bracket member 1e and pivotally connected thereto by means of a horizontal shaft 36.

Some additional features of the constructions shown in Figs. 1 to 5 will now be described with reference to Fig. 6.

In detail, the second shaft 7 is fixed to the support member 2 or formed integrally therewith as shown in Fig. 6. The first pulley 6 is supported rotatably to the second shaft 7 through a metal bearing 22, and the change-over frame 4 is supported pivotally on the first shaft 5 fixed to the support member 2. In this case, the change-over frame 4, instead of being supported on the first shaft 5 through a bush, is in a preferred arrangement fixed to a tubular shaft 37 which is itself rotatably supported on the first shaft 5 as shown in Fig. 6.

The tension spring 21, as shown in Fig. 6, is retained at one end to the support member 2 and at its other end to the tubular shaft 37. Alternatively, the other end of spring 21 could be retained to the change-over frame 4 instead of to the tubular shaft 37.

As will be clearly understood from the above description the derailleur of this invention is so constructed that the tubular second shaft 7 is sleeved coaxially onto the first shaft 5 via which the change-over frame 4 is supported to the support member 2, the first pulley 6 is supported rotatably on the second shaft 7, and the coiled spring means 21, is housed within the annular chamber 20 formed between the outer periphery of the first shaft 5 and the inner periphery of the second shaft 7, said coiled spring means 21 being retained at one end to a side of said change-over frame 4 and at its other end to a side of said support member 2, whereby the first shaft 5 is reducible in axial length in comparison with conventional designs, whilst enabling support of the change-over frame 4 in proximity to the support member 2.

Accordingly, the overall width of the derailleur is reduced and may even be used on a cycle provided with a chain case, and the cycle is reduced in the extent of its lateral projections thereby lessening the danger of suffering impact damage from foreign objects and promoting the safety of the cycle in use thereof.

In our contemporaneously filed EP—A—0020033 there is described and claimed a derailleur similar to that described with reference to Figures 1 to 3 herein and to which attention is hereby drawn.

## Claims

1. A cycle derailleur for use in switching a drive chain between different sprockets of a multi-stage sprocket assembly for changing gear, which derailleur comprises a fixing member (1); a support member (2) mounted on said fixing member so as to be movable relative thereto; a change-over frame (4) pivotally supported on said support member (2) via a first generally horizontally extending in use, shaft (5); a coiled spring means (21) arranged for acting between said support member (2) and said change-over frame (4) for tensioning a drive chain of the cycle in use of the derailleur; a first pulley (6) rotatably mounted around said first shaft (5); and a second pulley (8) rotatably supported on the change-over frame (4) characterized in that a second tubular shaft (7) is disposed coaxially with and around said first shaft (5) so as to define an annular chamber (20) therebetween, said second shaft (7) being secured to one of said support member (2) and said change-over frame (4), and said coiled spring means (21) being disposed in said annular chamber (20) around said first shaft (5).

2. A cycle derailleur according to claim 1 wherein said support member (2) is pivotally mounted on said fixing member (1) by means of a generally vertically extending, in use, shaft (3).

3. A cycle derailleur according to claim 1, wherein said support member (2) is supported on said fixing member (1) via two parallel link members (32, 33).

4. A cycle derailleur according to any one of claims 1 to 3 wherein said second shaft (7) is fixed to said change-over frame (4) and supported rotatably on said first shaft (5).

5. A cycle derailleur according to claim 4, wherein said coiled spring means (21) housed within said annular chamber (20) is retained at one end to said first shaft (5) and at its other end to said second shaft (7).

6. A cycle derailleur according to any one of claims 1 to 3 wherein said second shaft (7) is fixed to said support member (2) and said change-over frame (4) is supported rotatably on said first shaft (5).

7. A cycle derailleur according to claim 6, wherein said second shaft (7) is formed integrally with said support member (2).

8. A cycle derailleur according to claim 6 or claim 7 wherein said coiled spring means (21) housed within said annular chamber (20), is retained at one end to said support member (2) and at its other end to said change-over frame (4).

9. A cycle derailleur according to any one of claims 6 to 8, wherein a tubular shaft (37) is supported rotatably on said first shaft (5), said change-over frame (4) being fixed to said tubular shaft (37).

**Revendications**

1. Dérailleur de bicyclette utilisable pour le transfert d'une chaîne d'entraînement entre différents pignons d'un ensemble de pignons à plusieurs étages de changement de vitesses, lequel dérailleur comprend une pièce de fixation (1); une pièce de support (2) montée sur ladite pièce de fixation de façon à pouvoir se déplacer par rapport à elle; un train d'inversion de vitesse (4) supporté de façon pivotante sur la pièce de support (2) par l'intermédiaire d'un premier arbre (5) sensiblement horizontal en position d'utilisation; un ressort à enroulement hélicoîdal (21) disposé de façon à exercer une action entre la pièce de support (2) et le train d'inversion de vitesse (4), pour tendre une chaîne d'entraînement de la bicyclette pendant l'utilisation du dérailleur; une première poulie (6) montée en rotation sur le premier arbre (5); et une deuxième poulie (8) supportée en rotation sur le train d'inversion (4) lequel dérailleur est caractérisé en ce qu'un deuxième arbre tubulaire (7) est disposé coaxialement et autour de premier arbre (5) de manière à délimiter une chambre annulaire (20) entre eux, ce deuxième arbre (7) étant fixé à la pièce de support (2) ou au train d'inversion (4), le ressort hélicoîdal (21) étant disposé dans la chambre annulaire (20) autour de premier arbre (5).

2. Dérailleur de bicyclette suivant la revendication 1, caractérisé en ce que la piece de support (2) est montée de façon pivotante sur la pièce de fixation (1) au moyen d'un arbre (3) sensiblement vertical en position d'utilisation.

3. Dérailleur de bicyclette, suivant la revendication 1, caractérisé en ce que la pièce de support (2) est supportée sur la pièce de fixation (1) par l'intermédiaire de deux biellettes parallèles (32, 33).

4. Dérailleur de bicyclette suivant l'une quelconque des revendications 1 à 3, caractérisé en ce que le deuxième arbre (7) est fixé au train d'inversion de vitesse (4) et est supporté en rotation sur le premier arbre (5).

5. Dérailleur de bicyclette suivant la revendication 4, caractérisé en ce que le ressort hélicoidal (21) logé dans la chambre annulaire (20) est retenu à une de ses extrémités sur le premier arbre (5) et à son autre extrémité sur le deuxième arbre (7).

6. Dérailleur de bicyclette suivant l'une quelconque des revendications 1 à 3, caractérisé en ce que le deuxième arbre (7) est fixé à la pièce de support (2) et en ce que le train d'inversion de vitesse (4) est supporté en rotation sur le premier arbre (5).

7. Dérailleur de bicyclette suivant la revendication 6, caractérisé en ce que le deuxième arbre (7) est réalisé en une seule pièce avec la pièce de support (2).

8. Dérailleur de bicyclette suivant la revendication 6 ou la revendication 7, caractérisé en ce que le ressort hélicoîdal (21) logé dans la chambre annulaire (20) est retenu à l'une de ses extrémités à la pièce de support (2) et à son autre extrémité au train d'inversion de vitesse (4).

9 Dérailleur de bicyclette suivant l'une quelconque des revendications 6 à 8, caractérisé en ce qu'un arbre tubulaire (37) est supporté en rotation sur le premier arbre (5), le train d'inversion de vitesse (4) étant fixé à l'arbre tubulaire (37).

**Patentansprüche**

1. Fahrradgangschaltung zum Umschalten einer Antriebskette zwischen verschiedenen Kettenrädern einer Gangschaltbaugruppe mit mehreren Kettenrädern, wobei die Gangschaltung aus einem Befestigungsglied (1), einem darauf angeordneten und gegenüber diesem beweglich gelagerten Stützglied (2), einem auf diesem Stützglied (2) über eine erste, im Gebrauch sich allgemein horizontal erstreckende Welle (5) schwenkbar gelagerten Umschaltrahmen (4), einer zwischen jenem Stützglied (2) und diesem Umschaltrahmen (4) wirkend angeordneten Spiralfeder (21) zum Spannen einer Antriebskette des Fahrrads beim Gebrauch der Gangschaltung, einer ersten, um die besagte erste Welle (5) drehbar gelagerten Scheibe (6) und einer zweiten, auf dem Umschaltrahmen (4) drehbar gelagerten Scheibe (8) besteht, dadurch gekennzeichnet, dass eine zweite röhrenförmige Welle (7) koaxial mit besagter erster Welle (5) und um diese herum so angeordnet ist, dass dazwischen eine ringförmige Kammer (20) entsteht, wobei diese zweite Welle (7) entweder an jenem Stützglied (2) oder jenem Umschaltrahmen (4) befestigt ist und die besagte Spiralfeder (21) in dieser ringförmigen Kammer (20) um jene erste Welle (5) herum angeordnet ist.

2. Fahrradgangschaltung nach Anspruch 1, worin dieses Stützglied (2) mittles einer sich im Gebrauch allgemein vertikal erstreckenden Welle (3) schwenkbar auf jenem Befestigungsglied (1) gelagert ist.

3. Fahrradgangschaltung nach Anspruch 1, worin sich jenes Stützglied (2) auf dem besagten Befestigungsglied (1) über zwei parallele Kulissenglieder (32, 33) abstützt.

4. Fahrradgangschaltung nach einem der Ansprüche 1 bis 3, worin diese zweite Welle (7) an jenem Umschaltrahmen (4) befestigt und drehbar auf jener ersten Welle (5) abgestützt ist.

5. Fahrradgangschaltung nach Anspruch 4, worin besagte, innerhalb dieser ringförmigen Kammer (20) untergebrachte Spiralfeder (21) an einem Ende an jener ersten Welle (5) und am anderen Ende an jener zweiten Welle (7) gehaltert ist.

6. Fahrradgangschaltung nach einem der Ansprüche 1 bis 3, worin diese zweite Welle (7) an jenem Stützglied (2) befestigt und jener Umschaltrahmen (4) drehbar auf der besagten ersten Welle (5) abgestützt ist.

7. Fahrradgangschaltung nach Anspruch 6, worin diese zweite Welle (7) einstückig mit jenem Stützglied (2) ausgebildet ist.

8. Fahrradgangschaltung nach Anspruch 6 oder 7, worin besagte, in dieser ringförmigen Kammer (20) untergebrachte Spiralfeder (21) an ihrem einen Ende an jenem Stützglied (2) und an ihrem anderen Ende an jenem Umschaltrahmen (4) gehaltert ist.

9. Fahrradgangschaltung nach einem der Ansprüche 6 bis 8, worin eine röhrenförmige Welle (37) auf jener ersten Welle (5) drehbar gelagert ist, wobei jener Umschaltrahmen (4) an dieser röhrenförmigen Welle (37) befestigt ist.

0018842

# FIG. 1

# FIG.2

# FIG.3

# FIG.4

# FIG. 5

# FIG. 6